# EUROPEAN PATENT APPLICATION

(11) **EP 4 131 511 A1**
(43) Date of publication of application: **08.02.2023**
(21) Application number: 20929161.6
(22) Date of filing: 31.03.2020
(51) Int. Cl.: H01M 4/66

(54) **CELL, BATTERY, AND ELECTRONIC DEVICE**

(71) Applicant: Ningde Amperex Technology Ltd., Ningde, Fujian 350900 (CN)
(72) Inventor: LIU, Zuchao, Ningde, Fujian 350900 (CN)
(74) Representative: Klunker IP Patentanwälte PartG mbB
(86) International application number: PCT/CN2020/082538
(87) International publication number: WO 2021/195999

(57) **Abstract**

A battery cell (1), including an electrode assembly (11). The electrode assembly (11) is formed by stacking in sequence or winding a first electrode plate (12), a separator (13), and a second electrode plate (14). The first electrode plate (12) includes a first current collector (121) and a first active material layer (122) disposed on two sides of the first current collector (121). The first electrode plate (12) further includes a conductive layer (123). The first current collector (121) includes a first surface (1211) and a second surface (1212) facing away from the first surface (1211). The conductive layer (123) completely covers the first surface (1211) and/or the second surface (1212). The first active material layer (122) is disposed on a surface of the conductive layer (123). This application further provides a battery (10) containing the battery cell (1) and an electronic apparatus (100) with such battery (10).

## Description

### TECHNICAL FIELD

This application relates to the field of batteries, and specifically, to a battery cell, a battery containing the battery cell and an electronic apparatus with such battery.

### BACKGROUND

With extensive application of lithium batteries in the fields such as mobile phones, smart bands, AR, and VR, application scenarios of the lithium batteries are becoming increasingly complicated, thereby imposing more rigorous requirements on safety of the lithium batteries. At present, battery safety is mainly improved by increasing an amount of binders in a positive electrode active material layer, adopting an empty aluminum foil against empty copper foil design, and the like. Increasing an amount of binders in a positive electrode active material layer can make a positive electrode membrane and a positive electrode current collector bond more firmly, avoiding an exposed negative electrode current collector and eliminating dangerous short circuits inside a battery (short circuits in negative current collector-positive electrode plate). However, this will result in a reduced transmission speed of lithium ions in an electrode plate, which deteriorates performance of the battery. The design of empty aluminum foil against empty copper coil has high requirements on production process control, for example, short circuit in empty aluminum foil against empty copper foil is easy to be caused by burrs or dust brought in by accident, which leads to abnormality or an increased self-discharge rate of the battery, although such design can induce short circuit by force for security in a case that the battery is broken. In addition, such design delivers a thicker battery with reduced energy density, and when applied in a battery with large capacity, such design will cause the battery to catch fire and fail due to incapability of enduring instantaneous release of enormous energy.

### SUMMARY

In view of this, it is necessary to provide a battery cell to resolve a problem that a battery has poor safety performance.

Embodiments of this application provide a battery cell, including an electrode assembly, where the electrode assembly is formed by stacking in sequence or winding a first electrode plate, a separator, and a second electrode plate, and the first electrode plate includes a first current collector and a first active material layer disposed on two sides of the first current collector. The first electrode plate further includes a conductive layer, and the first current collector includes a first surface and a second surface facing away from the first surface, where the conductive layer completely covers the first surface and/or the second surface, and the first active material layer is disposed on a surface of the conductive layer.

In some embodiments, the second electrode plate includes a second current collector, a second active material layer disposed on two surfaces of the second current collector, and an insulation layer. The second current collector includes a uncoated area where the second active material layer is not disposed, and the insulation layer is disposed in the uncoated area.

In some embodiments, in a winding direction of the electrode assembly, the second active material is disposed on two surfaces of a starting end of the second current collector, the second active material layer is disposed on a surface of a finishing end of the second current collector facing towards a center of the electrode assembly, and the insulation layer is disposed on a surface of the finishing end of the second current collector facing away from the center of the electrode assembly.

In some embodiments, on a surface at an outermost circle of the electrode assembly, a portion where the second current collector bends for the last time is defined as a bending section, and the electrode assembly further includes an insulation tape with one end of the insulation tape attached to the finishing end of the second current collector and the other end of the insulation tape attached to the bending section.

In some embodiments, the insulation layer includes 3%-15% first binder and 85%-97% ceramics.

In some embodiments, the ceramics include one or more of aluminum oxide, aluminum hydroxide, silicon oxide, titanium oxide, and zirconium oxide.

In some embodiments, in a winding direction of the electrode assembly, the first active material layer is not disposed on a surface of the conductive layer at a starting end of the first current collector facing towards a center of the electrode assembly, and the first active material layer is disposed on two surfaces of the conductive layer at a finishing end of the first current collector.

In some embodiments, the conductive layer includes 3%-20% conductive agent, 70%-95% second binder, and 2%-5% dispersing agent.

In some embodiments, the conductive layer has a resistance of 0.15 Ω-0.8 Ω.

Some embodiments of this application further provide a battery, including the foregoing battery cell and a housing for accommodating the battery cell.

Som embodiments of this application further provide an electronic apparatus, including the foregoing battery and a battery compartment configured to dispose the battery.

To sum up, in this application, the conductive layer is applied on the first current collector to allow direct contact between the conductive layer and the separator, while guaranteeing that the first current collector is not exposed. In a case that a battery cell is damaged due to a mechanical external force and leads to damage of the separator, because the conductive layer is applied on the first current collector, the second electrode plate can only be in direct contact with the conductive layer to be short-circuited. However, due to a large contact resistance, the battery cell as a whole hardly produces any heat, thereby effectively enhancing safety performance of the battery cell. In addition, that the conductive layer includes a second binder allows a firm bond between the conductive layer and the separator, so that the battery cell forms a whole to enhance rigidity of the battery cell. In this case, the battery cell is not prone to local deformation even when the battery cell is damaged under a mechanical external force.

### BRIEF DESCRIPTION OF DRAWINGS

FIG. 1 is a schematic diagram of a battery cell according to an embodiment of this application.
FIG. 2 is a schematic cross-sectional diagram of a first electrode plate shown in FIG. 1.
FIG. 3 is a schematic exploded view of the first electrode plate shown in FIG. 2.
FIG. 4 is a schematic exploded view of a first electrode plate according to another embodiment of this application.
FIG. 5 is a schematic cross-sectional diagram of the second electrode plate shown in FIG. 1.
FIG. 6 is a schematic cross-sectional diagram of the second electrode plate shown in FIG. 5.
FIG. 7 is a schematic diagram of a battery according to an embodiment of this application.
FIG. 8 is a schematic diagram of a module of an electronic apparatus according to an embodiment of this application.
FIG. 9 is a schematic cross-sectional diagram of a first electrode plate according to another embodiment of this application.
FIG. 10 is a schematic cross-sectional diagram of a second electrode plate according to another embodiment of this application.

**Reference signs of main components:**

| | |
|---|---|
| Electronic apparatus | 100 |
| Battery | 10 |
| Battery cell | 1 |
| Electrode assembly | 11 |
| First electrode plate | 12 |
| First current collector | 121 |
| First surface | 1211 |
| Second surface | 1212 |
| First area | 1213 |
| First flat region | 1213a |
| First bending region | 1213b |
| Second flat region | 1213c |
| Second bending region | 1213d |
| Third flat region | 1213e |
| Third bending region | 1213f |
| Second area | 1214 |
| First active material layer | 122 |
| Conductive layer | 123 |
| First conductive layer | 124 |
| Separator | 13 |
| Second electrode plate | 14 |
| Second current collector | 141 |
| Uncoated area | 1411 |
| Two-sided region | 1412 |
| One-sided region | 1413 |
| Bending section | 1414 |
| Second active material layer | 142 |
| Insulation layer | 143 |
| Insulation tape | 15 |
| First tab | 16 |
| Second tab | 17 |
| Housing | 2 |

This application will be further described with reference to the accompanying drawings in the following specific embodiments.

### DESCRIPTION OF EMBODIMENTS

The following clearly and completely describes the technical solutions in the examples of this application with reference to the accompanying drawings in the examples of this application. Apparently, the described examples are only some but not all of the examples of this application. All other examples obtained by a person of ordinary skill in the art based on the examples of this application without creative efforts shall fall within the protection scope of this application.

Unless otherwise defined, all technical and scientific terms used herein shall have the same meanings as commonly understood by those skilled in the art to which this application belongs. The terms used herein in the specification of this application are only used to describe specific examples, and are not intended to limit this application.

The following describes in detail some embodiments of this application with reference to the accompanying drawings. In absence of conflicts, the following examples and features in the examples may be combined.

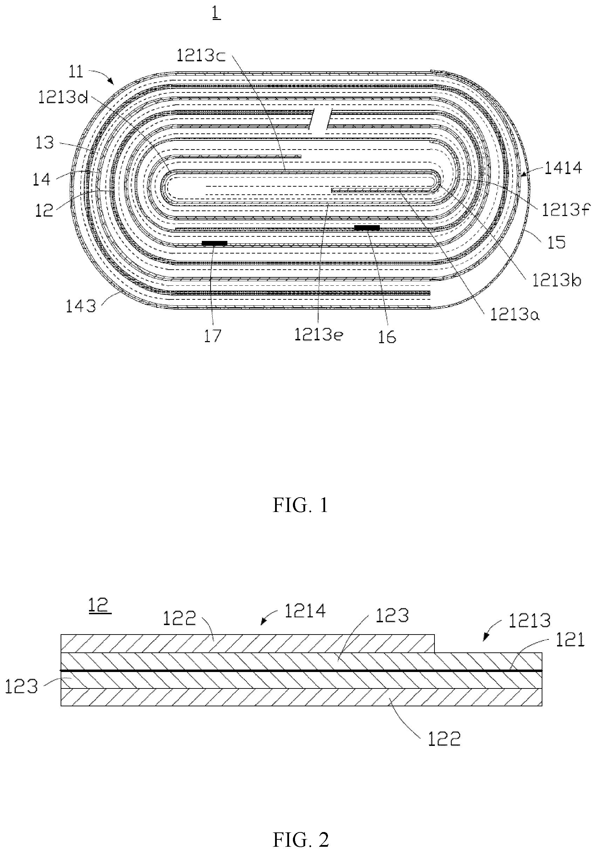

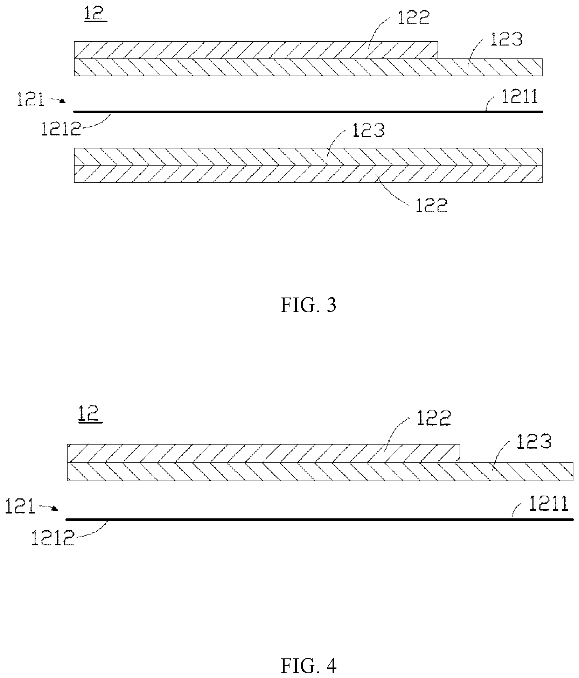

Referring to FIG. 1, an embodiment of this application provides a battery cell 1, including an electrode assembly 11. The electrode assembly 11 is formed by winding a sequential arrangement of a first electrode plate 12, a separator 13, and a second electrode plate 14. Referring to FIG. 2, the first electrode plate 12 includes a first current collector 121 and a first active material layer 122 disposed on two sides of the first current collector 121. In this embodiment, the first electrode plate 12 further includes a conductive layer 123. Referring to FIG. 3 and FIG. 4 together, the first current collector 121 includes a first surface 1211 and a second surface 1212 facing away from the first surface 1211. The conductive layer (123) completely covers the first surface (1211) and/or the second surface (1212). The first active material layer 122 is disposed on a surface of the conductive layer 123. The first active material layer 122 includes one or more of graphite, silicon, and silicon dioxide.

In other embodiments, the electrode assembly 11 is formed by stacking a first electrode plate 12, a separator 13, and a second electrode plate 14 in sequence.

Referring to FIG. 1 and FIG. 2, in a winding direction of the electrode assembly 11, the first active material layer 122 is not disposed on a surface of the conductive layer 123 facing towards a center of the electrode assembly 11 at a starting end of the first current collector 121, and the first active material layer 122 is disposed on two surfaces of the conductive layer 123 at a finishing end of the first current collector 121.

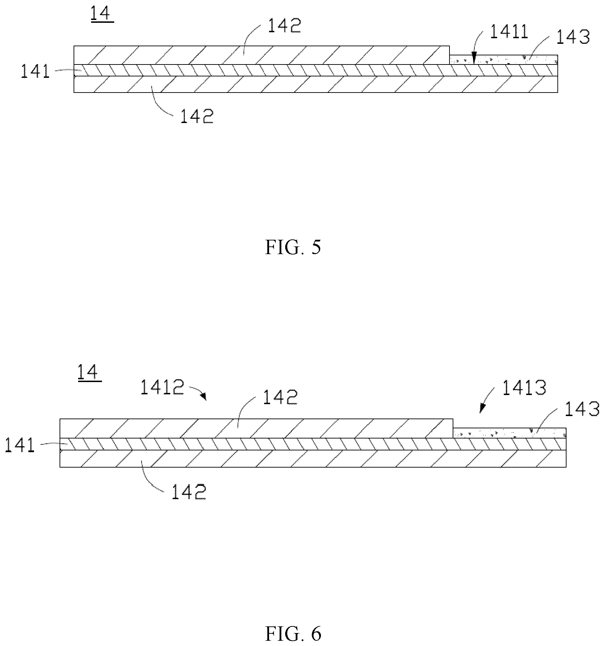

Referring to FIG. 5, the second electrode plate 14 includes a second current collector 141, a second active material layer 142 disposed on two surfaces of the second current collector 141, and an insulation layer 143. The second current collector 141 includes a uncoated area 1411 where the second active material layer 142 is not disposed. The insulation layer 143 is disposed in the uncoated area 1411. Referring to FIG. 1 and FIG. 5, in a winding direction of the electrode assembly 11, the second active material 22 is disposed on two surfaces of a starting end of the second current collector 141. The second active material layer 142 is disposed on a surface of a finishing end of the second current collector 141 facing towards a center of the electrode assembly 11, and the insulation layer 143 is disposed on a surface of the finishing end of the second current collector 141 facing away from the center of the electrode assembly 11. Provision of the insulation layer 143 avoids a risk of direct contact between the second current collector 141 and the first electrode plate 12 due to exposure of the second current collector 141, so as to effectively prevent a fire caused by short circuit due to the direct contact between the second current collector 141 and the first electrode plate 12. In addition, since a resistance of the insulation layer 143 is far greater than that of the second current collector 141, even if a broken separator 13 gives rise to short circuit due to direct contact between the insulation layer 143 and the first electrode plate 12, the battery cell 1 as a whole hardly produces any heat because of a large contact resistance. This effectively guarantees use safety performance of the battery cell 1.

The second active material layer 142 includes one or more of lithium cobalt oxide, lithium manganate, and lithium iron phosphate.

In this embodiment, referring to FIG. 1 and FIG. 6, in a winding direction of the electrode assembly 11, the second current collector 141 includes a two-sided region 1412 and a one-sided region 1413 that are sequentially connected from the starting end to the finishing end of the second current collector 141. The two-sided region 1412 refers to a portion provided with the second active material layer 142 on two surfaces of the second current collector 141, and the one-sided region 1413 refers to a portion not provided with the second active material layer 142 on a surface of the second current collector 141 facing away from the electrode assembly 11. The uncoated area 1411 includes the one-sided region 1413. The one-sided region 1413 is located at an outermost circle of the electrode assembly 11. The insulation layer 143 is disposed on a surface of the one-sided region 1413 facing away from the center of the electrode assembly 11.

Further, referring to FIG. 1, on a surface at an outermost circle of the electrode assembly 11, a portion where the second current collector 141 bends for the last time is defined as a bending section 1414. The electrode assembly 11 further includes an insulation tape 15. One end of the insulation tape 15 is attached to the finishing end of the second current collector 141, and the other end of the insulation tape 15 is attached to the bending section 1414.

The insulation layer 143 includes 3%-15% first binder and 85%-97% ceramics. The ceramics include one or more of aluminum oxide, aluminum hydroxide, silicon oxide, titanium oxide, and zirconium oxide. The first binder may be one or more of polyvinylidene fluoride, polytetrafluoroethylene, acrylate, butadiene-styrene rubber, styrene, derivative thereof, and the like.

The conductive layer 123 includes 3%-20% conductive agent, 70%-95% second binder, and 2%-5% dispersing agent. The conductive agent may be one or more of carbon nanotube, conductive carbon black, conductive graphite, and the like. The second binder may be one or more of polyvinylidene fluoride, polytetrafluoroethylene, acrylate, butadiene-styrene rubber, styrene, derivative thereof, and the like. The dispersing agent may be one or more of sodium carboxymethylcellulose, polyethylene glycol, and the like.

In this embodiment, referring to FIG. 1, FIG. 2, and FIG. 3, The conductive layer123 completely covers the first surface 1211 and/or the second surface 1212. In a winding direction of the electrode assembly 11, the first current collector 121 includes a first area 1213 and a second area 1214 that are sequentially connected from the starting end to the finishing end of the first current collector 121. The first active material layer 122 is disposed on two surfaces of the conductive layer 123 in the second area 1214. The first active material layer 122 is not disposed on a surface, facing towards a center of the electrode assembly 11, of the conductive layer 123 in the first area 1213. To be specific, only the conductive layer 123 is disposed on a surface, facing towards the center of the electrode assembly 11, of the first current collector 121 in the first area 1213. On the premise that the first current collector 121 is guaranteed not to be exposed, the conductive layer 123 may be in direct contact with the separator 13. In addition, that the conductive layer 123 includes 70%-95% second binder allows a firm bond between the conductive layer 123 and the separator 13, so that the battery cell 1 forms a whole to enhance rigidity of the battery cell 1. In this case, the battery cell 1 is not prone to local deformation even when the battery cell 1 is damaged under a mechanical external force. In addition, due to the existence of the conductive layer 123, even if the battery cell 1 is damaged due to a mechanical external force and leads to damage of the separator 13, because the conductive layer 123 is applied on the first current collector 121, the second electrode plate 14 can only be in direct contact with the conductive layer 123 to be short-circuited. However, since a proportion of the second binder in the conductive layer 123 is as high as 70%-95%, and the second binder is organic and almost non-conductive, the conductive layer 123 has a large resistance ranging from 0.15 Ω to 0.8 Ω. Therefore, the batter cell 1 as a whole hardly produces any heat, which effectively enhances safety performance of the battery cell 1.

Further, referring to FIG. 1, in the winding direction of the electrode assembly 11, the first area 1213 includes a first flat region 1213a, a first bending region 1213b, a second flat region 1213c, a second bending region 1213d, a third flat region 1213e, and a third bending region 1213f that are sequentially connected from the starting end to the finishing end of the first current collector 121. The first bending region 1213b, the second bending region 1213d, and the third bending region 1213f are regions formed by bending of the first current collector 121 for a first time, for a second time, and for a third time respectively. The first flat region 1213a is a region stretching from the starting end of the first current collector 121 to the first bending region 1213b, the second flat region 1213c is connected between the first bending region 1213b and the second bending region 1213d, and the third flat region 1213e is connected between the second bending region 1213d and the third bending region 1213f.

Further, the battery cell 1 further includes a first tab 16 and a second tab 17. The first tab 16 is connected to the first current collector 121 and the second tab 17 is connected to the second current collector 141. The first tab 16 may be a copper sheet or a nickel sheet. The second tab 17 may be an aluminum sheet.

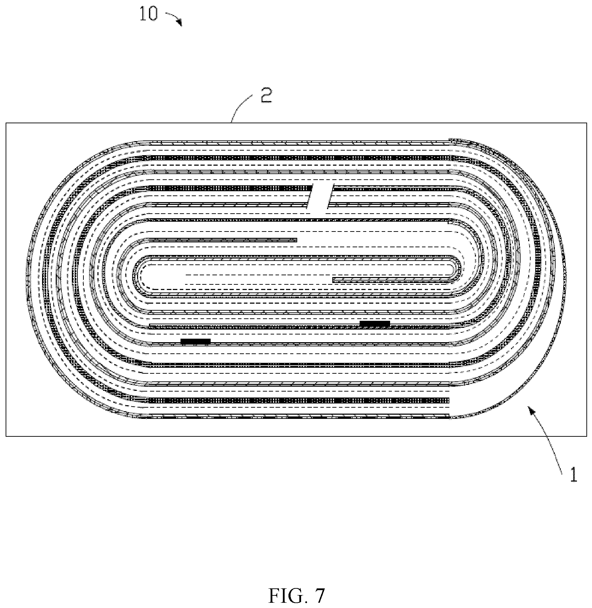

Referring to FIG. 7, this application further provides a battery 10, including a housing 2 and the foregoing battery cell 1. The battery cell 1 is accommodated in the housing 2. Certainly, the battery 10 further includes an electrolyte (not shown in the figure). The electrolyte is accommodated in the housing 2.

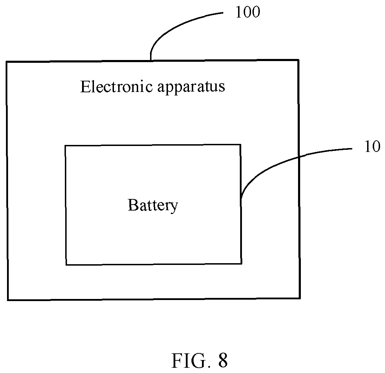

Referring to FIG. 8, this application further provides an electronic apparatus 100, including a battery compartment (not shown in the figure) and the foregoing battery 10. The battery compartment is configured to dispose the battery 10. The electronic apparatus 100 may be a mobile electronic device, an energy storage device, an electric vehicle, a hybrid electric vehicle, or the like. The mobile electronic device may be a mobile phone, a wearable electronic device, a tablet computer, a laptop computer, or the like.

The battery pack 10 of this application is described in detail below by using examples. It should be understood that, in this application, a size, a material, and/or a proportion of a first current collector, a first active material layer, a conductive layer, a first conductive layer, a second current collector, a second active material layer, an insulation layer, a separator, and the like may be selected according to actual needs without being limited to the content described in the examples and comparative examples.

### Example 1

Referring FIG. 7, a battery 10 includes a battery cell 1 and a housing 2 configured to accommodate the battery cell 1.

Referring FIG. 1, the battery cell 1 includes an electrode assembly 11. The electrode assembly 11 is formed by winding a sequential arrangement of a first electrode plate 12, a separator 13, and a second electrode plate 14. Referring to FIG. 2 and FIG. 3, the first electrode plate 12 includes a first current collector 121 and a first active material layer 122 disposed on two sides of the first current collector 121. In Example 1, the first electrode plate 12 further includes a conductive layer 123. The first current collector 121 includes a first surface 1211 and a second surface 1212 facing away from the first surface 1211. The conductive layer123 completely covers the first surface 1211 and/or the second surface 1212.

Referring FIG. 1 and FIG. 2, in a winding direction of the electrode assembly 11, the first current collector 121 includes a first area 1213 and a second area 1214 that are sequentially connected from a starting end to a finishing end of the first current collector 121. The first area 1213 includes a first flat region 1213a, a first bending region 1213b, a second flat region 1213c, a second bending region 1213d, a third flat region 1213e, and a third bending region 1213f that are sequentially connected from the starting end to the finishing end of the first current collector 121. The first bending region 1213b, the second bending region 1213d, and the third bending region 1213f are regions formed by bending of the first current collector 121 for a first time, for a second time, and for a third time respectively. The first flat region 1213a is a region stretching from the starting end of the first current collector 121 to the first bending region 1213b, the second flat region 1213c is connected between the first bending region 1213b and the second bending region 1213d, and the third flat region 1213e is connected between the second bending region 1213d and the third bending region 1213f.

In Example 1, referring to FIG. 1 and FIG. 2, the first active material layer 122 is not disposed on a surface, facing towards a center of the electrode assembly 11, of the conductive layer 123 in the first area 1213, and the first active material layer 122 is disposed on two surfaces of the conductive layer 123 in the second area 1214.

Referring to FIG. 5, the second electrode plate 14 includes a second current collector 141, a second active material layer 142 disposed on two surfaces of the second current collector 141, and an insulation layer 143.

Referring FIG. 1 and FIG. 6, in a winding direction of the electrode assembly 11, the second current collector 141 includes a two-sided region 1412 and a one-sided region 1413 that are sequentially connected from a starting end to a finishing end of the second current collector 141. The two-sided region 1412 refers to a portion provided with the second active material layer 142 on two surfaces of the second current collector 141, and the one-sided region 1413 refers to a portion not provided with the second active material layer 142 on a surface of the second current collector 141 facing away from the electrode assembly 11. The one-sided region 1413 is located at an outermost circle of the electrode assembly 11. The insulation layer 143 is disposed on a surface of the one-sided region 1413 facing away from a center of the electrode assembly 11.

In Example 1, a polyethylene film is used as the separator 13. The first active material layer 122 includes graphite. The second active material layer 142 includes lithium cobalt oxide. The insulation layer 143 includes 10% first binder and 90% aluminum oxide. The conductive layer 123 includes 5% conductive carbon, 92% second binder, and 3% dispersing agent. The battery 10 is a pouch battery, and the housing 2 may be an aluminum-plastic film.

In other embodiments, the separator 13 may alternatively be a polypropylene film or an aramid film. The battery 10 may alternatively be a steel shell battery or the like.

In Example 1, a needle penetration test is performed on the battery 10. The needle penetration test included the following steps:

First, charge the battery 10 to a voltage of 4.2 V-4.4 V; then, use a steel nail with a diameter of 2.5 mm to penetrate the entire battery 10. If the tested battery 10 does not catch fire or explode, the battery 10 is judged to have passed the needle penetration test.

In Example 1, a heavy impact test is performed on the battery 10. The heavy impact test included the following steps:

First, charge the battery 10 to a voltage of 4.2 V-4.4 V; then, place a round bar with a diameter of 15.8 mm on the battery 10; and then drop a 9.6 kg hammer in a direction perpendicular to the round bar from a height of 610 mm to give an impact on the battery 10. If the tested battery 10 does not catch fire or explode, the battery 10 is judged to have passed the heavy impact test.

### Example 2

A difference between Example 2 and Example 1 lies in the composition of the insulation layer 143.

In Example 2, the insulation layer 143 includes 10% first binder and 90% aluminum hydroxide.

### Example 3

A difference between Example 3 and Example 1 lies in the composition of the insulation layer 143.

In Example 3, the insulation layer 143 includes 10% first binder, 80% aluminum hydroxide, and 10% aluminum oxide.

### Example 4

A difference between Example 4 and Example 1 lies in the composition of the insulation layer 143.

In Example 4, the insulation layer 143 includes 5% first binder and 95% aluminum hydroxide.

### Example 5

A difference between Example 5 and Example 1 lies in the composition of the insulation layer 143.

In Example 5, the insulation layer 143 includes 10% first binder and 90% silicon oxide.

### Example 6

A difference between Example 6 and Example 1 lies in the composition of the insulation layer 143 and that of the first active material layer 122.

In Example 6, the insulation layer 143 includes 10% first binder and 90% aluminum hydroxide. The first active material layer 122 includes 80% graphite and 15% silicon.

### Example 7

A difference between Example 7 and Example 6 lies in the composition of the conductive layer 123 and that of the first active material layer 122.

In Example 7, the conductive layer 123 includes 10% conductive carbon, 87% first binder, and 3% dispersing agent. The first active material layer 122 includes only graphite.

### Example 8

A difference between Example 8 and Example 6 lies in the composition of the conductive layer 123 and that of the first active material layer 122.

In Example 8, the conductive layer 123 includes 3% conductive carbon, 94% first binder, and 3% dispersing agent. The first active material layer 122 includes only graphite.

### Example 9

A difference between Example 9 and Example 6 lies in the composition of the conductive layer 123 and that of the first active material layer 122.

In Example 9, the conductive layer 123 includes 15% conductive carbon, 82% first binder, and 3% dispersing agent. The first active material layer 122 includes only graphite.

### Example 10

A difference between Example 10 and Example 9 lies in the structure of the first electrode plate 12.

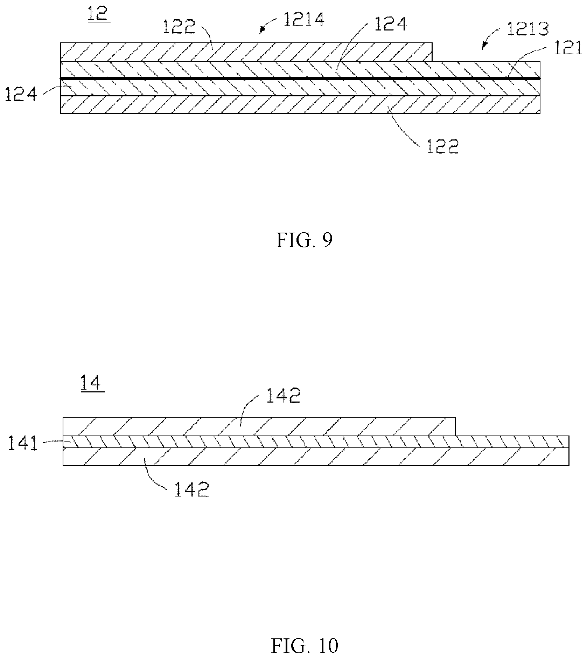

In Example 10, referring to FIG. 9, the first electrode plate 12 includes the first current collector 121, the first conductive layer 124, and the first active material layer 122. The first conductive layer 124 is disposed on a surface of the first area 1213 facing away from a center of the electrode assembly 11 as well as on two surfaces of the second area 1214. The first active material layer 122 is disposed on a surface of the conductive layer 124.

The conductive layer 124 includes 65% conductive carbon, 32% first binder, and 3% dispersing agent.

### Example 11

A difference between Example 11 and Example 5 lies in the structure of the second electrode plate 14 and the location where the insulation tape 15 is disposed.

In Example 11, referring to FIG. 10, the second electrode plate 14 is not provided with the insulation layer 143.

One end of the insulation tape 15 is attached to a finishing end of the second current collector 141, the other end of the insulation tape 15 is attached to an outermost circle of the electrode assembly 10, and the insulation tape 15 is further attached to the separator 3.

### Comparative Example 1

A difference between Comparative Example 1 and Example 10 lies in the structure of the second electrode plate 14 and the location where the insulation tape 15 is disposed.

In Comparative Example 1, referring FIG. 10, the second electrode plate 14 is not provided with the insulation layer 143.

One end of the insulation tape 15 is attached to a finishing end of the second current collector 141, the other end of the insulation tape 15 is attached to an outermost circle of the electrode assembly 10, and the insulation tape 15 is further attached to the separator 13.

Experiment parameters and test results involved in Examples 1 to 11 and Comparative Example 1 are shown in Table 1.

**Table 1**

| Group | First active material layer | Second active material layer | Conductive layer | Insulation layer | Pass rate of needle penetration test | Pass rate of heavy impact test |
|---|---|---|---|---|---|---|
| Example 1 | Graphite | Lithium cobalt oxide | 5% conductive carbon + 92% binder + 3% dispersing agent | 90% aluminum oxide + 10% binder | 90% | 90% |
| Example 2 | Graphite | Lithium cobalt oxide | 5% conductive carbon + 92% binder + 3% dispersing agent | 90% aluminum hydroxide + 10% binder | 100% | 100% |
| Example 3 | Graphite | Lithium cobalt oxide | 5% conductive carbon + 92% binder + 3% dispersing agent | 80% aluminum hydroxide +10% aluminum oxide + 10% binder | 80% | 80% |
| Example 4 | Graphite | Lithium cobalt oxide | 5% conductive carbon + 92% binder + 3% dispersing agent | 95% aluminum hydroxide + 5% binder | 90% | 80% |
| Example 5 | Graphite | Lithium cobalt oxide | 5% conductive carbon + 92% binder + 3% dispersing agent | 90% silicon oxide + 10% binder | 80% | 70% |
| Example 6 | 80% graphite + 15% silicon | Lithium cobalt oxide | 5% conductive carbon + 92% binder + 3% dispersing agent | 90% aluminum hydroxide + 10% binder | 90% | 80% |
| Example 7 | Graphite | Lithium cobalt oxide | 10% conductive carbon + 87% binder + 3% dispersing agent | 90% aluminum hydroxide + 10% binder | 80% | 80% |
| Example 8 | Graphite | Lithium cobalt oxide | 3% conductive carbon + 97% binder + 3% dispersing agent | 90% aluminum hydroxide + 10% binder | 100% | 100% |
| Example 9 | Graphite | Lithium cobalt oxide | 15% conductive carbon + 82% binder + 3% dispersing agent | 90% aluminum hydroxide + 10% binder | 90% | 80% |
| Example 10 | Graphite | Lithium cobalt oxide | \ | 90% aluminum hydroxide + 10% binder | 50% | 60% |
| Example 11 | Graphite | Lithium cobalt oxide | 5% conductive carbon + 92% binder + 3% dispersing agent | \ | 50% | 60% |
| Comparative Example 1 | Graphite | Lithium cobalt oxide | \ | \ | 10% | 20% |

Referring to Table 1, it can be known by comparing Example 10 with Example 9 that provision of the conductive layer 123 can enhance rigidity and safety performance of the battery 10. It can be known by comparing Example 10 and Comparative Example 1 that provision of the insulation layer 143 can enhance rigidity and safety performance of the battery 10.

The foregoing examples are merely intended to describe the technical solutions of this application, but not intended to constitute any limitation. Although this application is described in detail with reference to preferred examples, persons of ordinary skill in the art should understand that modifications or equivalent replacements can be made to the technical solutions of this application, without departing from the spirit and essence of the technical solutions of this application.

## Claims

1. A battery cell, comprising an electrode assembly, wherein the electrode assembly is formed by stacking in sequence or winding a first electrode plate, a separator, and a second electrode plate; and the first electrode plate comprises a first current collector and a first active material layer disposed on two sides of the first current collector, **characterized in that**,
the first electrode plate further comprises a conductive layer; the first current collector comprises a first surface and a second surface facing away from the first surface; the conductive layer completely covers the first surface and/or the second surface; and the first active material layer is disposed on a surface of the conductive layer.

2. The battery cell according to claim 1, **characterized in that**, the second electrode plate comprises a second current collector, a second active material layer disposed on two surfaces of the second current collector, and an insulation layer, wherein the second current collector comprises a uncoated area not disposed with the second active material layer, and the insulation layer is disposed in the uncoated area.

3. The battery cell according to claim 2, **characterized in that**, in a winding direction of the electrode assembly, the second active material is disposed on two surfaces of a starting end of the second current collector, the second active material layer is disposed on a surface of a finishing end of the second current collector facing towards a center of the electrode assembly, and the insulation layer is disposed on a surface of the finishing end of the second current collector facing away from the center of the electrode assembly.

4. The battery cell according to claim 3, **characterized in that**, on a surface at an outermost circle of the electrode assembly, a portion where the second current collector bends for the first time is defined as a bending section, and the electrode assembly further comprises an insulation tape, with one end of the insulation tape attached to the finishing end of the second current collector and the other end of the insulation tape attached to the bending section.

5. The battery cell according to claim 2, **characterized in that**, the insulation layer comprises 3%-15% first binder and 85%-97% ceramics.

6. The battery cell according to claim 5, **characterized in that**, the ceramics comprise one or more selected from the group consisting of aluminum oxide, aluminum hydroxide, silicon oxide, titanium oxide, and zirconium oxide.

7. The battery cell according to claim 1, **characterized in that**, in a winding direction of the electrode assembly, the first active material layer is not disposed on a surface of the conductive layer facing towards a center of the electrode assembly at a starting end of the first current collector, and the first active material layer is disposed on two surfaces of the conductive layer at a finishing end of the first current collector.

8. The battery cell according to claim 1, **characterized in that** the conductive layer comprises 3%-20% conductive agent, 70%-95% second binder, and 2%-5% dispersing agent.

9. The battery cell according to claim 1, **characterized in that**, the conductive layer has a resistance of 0.15 Ω-0.8 Ω.

10. A battery, comprising a battery cell and a housing for accommodating the battery cell, **characterized in that**, the battery cell comprises the battery cell according to any one of claims 1 to 9.

11. An electronic apparatus, comprising a battery and a battery compartment configured to accommodate the battery, **characterized in that**, the battery comprises the battery according to claim 10.
